# EUROPEAN PATENT SPECIFICATION

(11) **EP 2 311 594 B1**
(45) Date of publication and mention of the grant of the patent: **28.02.2018**
(21) Application number: 10170893.1
(22) Date of filing: 27.07.2010
(51) Int. Cl.: B23H 7/04, B23H 7/06

(54) **Wire electric discharge machine and finish machining method of wire electric discharge machine**
Elektrische Drahterodiermaschine und Endbearbeitungsverfahren der elektrischen Drahterodiermaschine
Machine de décharge électrique faisant appel à un fil et procédé d'usinage de finition de la machine de décharge électrique faisant appel à un fil

(30) Priority: 16.10.2009 JP 2009239346
(43) Date of publication of application: 20.04.2011
(73) Proprietor: FANUC CORPORATION, Oshino-mura Minamitsuru-gun Yamanashi 401-0597 (JP)
(72) Inventor: Arakawa, Yasuo, Minamitsuru-gun Yamanashi 401-0597 (JP); Takayama, Yushi, Minamitsuru-gun Yamanashi 401-0597 (JP)
(74) Representative: Ward, James Norman

(56) References cited:
- EP-A2- 0 488 026
- EP-A2- 1 316 380
- US-A- 5 175 407
- US-A- 5 852 269

## Description

### BACKGROUND OF THE INVENTION

### Field of the Invention

The present invention relates to a wire electric discharge machine and a finish machining method of a wire electric discharge machine.

### Description of the Related Art

In finish machining in a wire electric discharge machine, a machined surface of a workpiece is cut to depths sequentially reduced from about 30 to 1 µm by electric discharge machining, based on a preceding rough machining process and a final finish machining process.

In the finish machining, machining goes forward from a machining starting position to achieve an actual machined shape. As a wire electrode of the wire electric discharge machine first approaches the previously machined surface of the workpiece (this action of the wire electrode will hereinafter be referred to as "approach"), electric discharge starts at a point several tens of micrometers short of a final destination commanded by a move program block for an approach area, a command for moving the wire electrode. Therefore, electric discharge machining is excessively carried out before the final destination is reached, so that a deep groove may be formed in the workpiece.

Likewise, when the wire electrode starts to leave the machined surface of the workpiece (this action of the wire electrode will hereinafter be referred to as "escape") in a program block for return to the machining starting position after the formation of the machined shape, electric discharge machining is continuously performed at a point of release from the workpiece. In consequence, this region is excessively machined, so that a deep groove may be formed in the workpiece surface. Since the wire electrode is linear, the deep groove at the release point extends in the axial direction of the wire electrode.

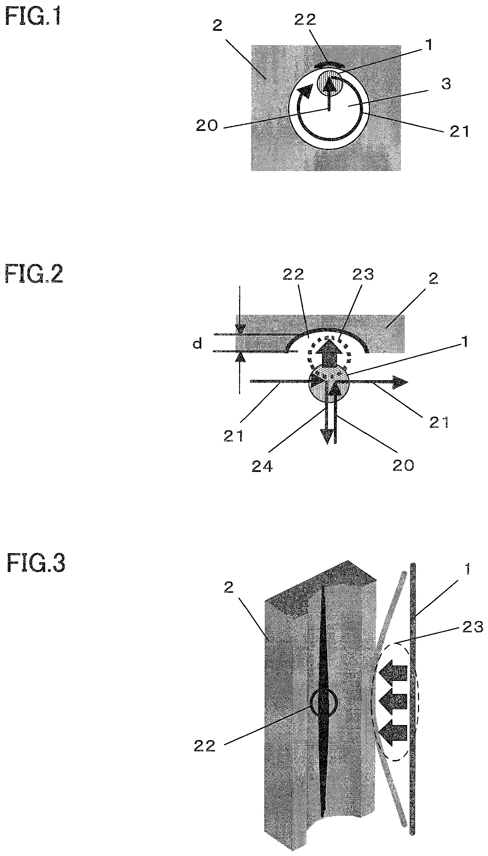

These phenomena will be described with reference to FIGS. 1 and 2. FIG. 1 is a top view showing die hole machining. FIG. 2 is a diagram illustrating deep damage formed in the workpiece as the wire electrode cuts the workpiece or escapes from it.

In order to finish a die hole 3 formed in a workpiece 2 to be cut, a wire electrode 1 is brought close to a wall surface the workpiece 2 with the rough-machined die hole 3 in an approach direction 20 shown in FIG. 1. The entire circumference of the wall surface of the die hole 3 is finish-machined by moving the wire electrode 1 relative to the workpiece 2 in a finish-machining movement direction 21 shown in FIG. 1. During the escape after the finish machining, the wire electrode 1 moves away from the workpiece 2 in an escape direction 24. Thus, a gouged groove 22 is formed in the workpiece 2 at the time of the approach for cutting or the escape.

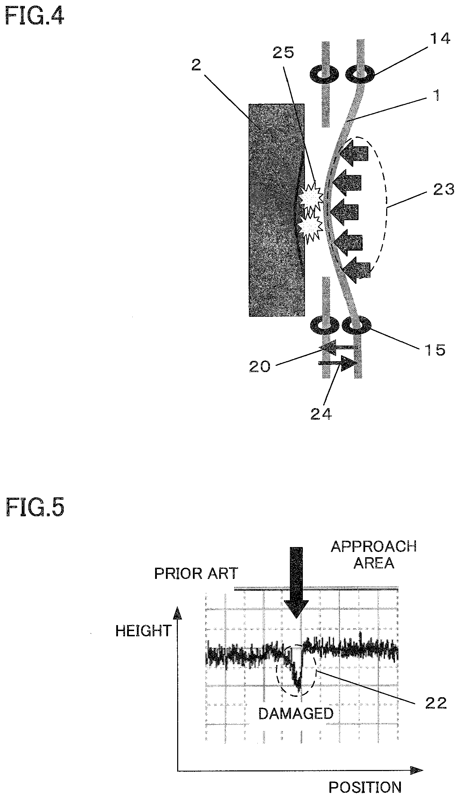

FIG. 3 is a side sectional view showing how the die hole shown in FIG. 2 is machined. If the wire electrode 1 relatively moves toward the workpiece 2, its central part is attracted to the workpiece 2 by an electrostatic force of attraction 23 and curved. Thereupon, electric discharge 25 is inevitably started before upper and lower wire guides 14 and 15 of the wire electrode 1 reach their machining starting positions, as shown in FIG. 4. Specifically, electric discharge is continued in one position so that a single region is inevitably over-discharged until a programmed position is reached by the wire electrode 1. The gouged groove 22 is formed in the surface of the workpiece 2 by the central part of the wire electrode 1.

FIG. 5 is a graph illustrating how damage is caused during the approach according to the prior art.

As described above, the gouged groove 22 is unfavorably formed as the wire electrode 1 approaches the workpiece 2. The gouged groove 22 is produced partly because the wire electrode 1, which is supported by the upper and lower wire guides 14 and 15 vertically holding the workpiece 2 between them, is attracted to the machined surface of the workpiece by the electrostatic force of attraction 23 as it approaches the workpiece surface with a voltage applied for electric discharge machining.

The electrostatic force of attraction 23 is a force that is produced when a voltage is applied between the wire electrode 1 and the workpiece 2. Since the voltage is applied between the wire electrode 1 and the workpiece 2, the wire electrode 1 is generally attracted to the workpiece 2 with the electrostatic force 23. The electrostatic force 23 is proportional to the square of the applied voltage between the wire electrode 1 and the workpiece 2 and inversely proportional to the distance between them. The higher the applied voltage, the greater the force of attraction is. The shorter the wire-to-workpiece distance, moreover, the greater the force of attraction is.

The larger the area with which the workpiece 2 and the wire electrode 1 face each other, that is, the thicker the workpiece 2, furthermore, the greater the electrostatic force of attraction 23 is. Naturally, if the distance between the upper and lower wire guides 14 and 15 that vertically support the wire electrode 1 is longer, the wire electrode 1 between the guides 14 and 15 can be more easily warped and attracted to the workpiece 2. Even if a tension on the wire electrode 1 is low, moreover, the wire electrode 1 is liable to be attracted to the workpiece 2.

These phenomena will be described further in detail. The wire electrode 1 is supported on the upper and lower sides of the workpiece 2 by the upper and lower wire guides 14 and 15, individually. The central part of the wire electrode 1 that is located close to the workpiece 2 is not supported, and its straightness is maintained by the tension on the electrode.

If the wire electrode 1 approaches the workpiece surface with the voltage applied for electric discharge, however, it is bowed and attracted to the machined surface of the workpiece 2 by the electrostatic force of attraction 23, even though the upper and lower wire guides 14 and 15 are located in positions short of an approach area move program block end point that is too far to allow the occurrence of electric discharge. Thus, the most displaced central part of the wire electrode 1 approaches the workpiece and inevitably initiates electric discharge.

While the machined surface is normally smoothed at an appropriate speed in finish machining, it is inevitably continuously subjected to electric discharge machining in the approach area until the program block end point is reached by the positions of the upper and lower wire guides 14 and 15. The longer the electric discharge time, therefore, the deeper the gouged groove (electric discharge damage) 22 formed on the surface of the workpiece 2 is.

A technique for preventing the production of the gouged groove 22 is disclosed in Japanese Patent Application Laid-Open No. 2007-75996. This is a wire electric discharge machining technique in which the position of an approach area is recognized, the distance between the recognized approach area and the center of a wire electrode at a machined shape portion is calculated, and machining is performed with energy corresponding to the calculated distance with reference to a machining energy input table. The input table carries set energy to be input in accordance with the calculated distance at the time of machining.

Further, International Publication WO 03/045614 A1 discloses a technique for adjusting an approach area of a machined surface of a workpiece to a desired shape. According to this technique, an operator uses shape specifying means to specify a negative indication value if he/she wants to form a convex shape near the approach area of the workpiece surface.

However, the techniques disclosed in Japanese Patent Application Laid-Open No. 2007-75996 and International Publication WO 03/045614 A1 are not intended to suppress the formation of the gouged groove 22 in the surface of the workpiece 2 by the electrostatic force of attraction 23 that is produced as a machining power source voltage is applied to the wire electrode 1.

In a normal electric discharge machining process, a voltage is previously applied between the wire electrode 1 and the workpiece 2, a movable axis is moved, and electric discharge is awaited until an appropriate discharge gap is approached. As a distance for the start of electric discharge is approached, therefore, it is impossible to prevent the central part of the wire electrode 1, which is advanced ahead of the positions of the wire guides that support the wire electrode, from approaching the workpiece and starting electric discharge.

In addition, the electric discharge is not bound to be interrupted the moment the wire electrode leaves the machined surface of the workpiece at right angles thereto at the end of the machining, and it continues until the wire electrode is separated at a distance of about 10 to 30 µm. Consequently, over-discharge is caused, so that the workpiece surface is gouged.

As the wire electrode is separated from the machined surface, the electric discharge becomes more infrequent, step by step, so that the voltage between the wire electrode 1 and the workpiece 2 becomes higher, and the electrostatic force of attraction 23 increases. Although the axis movement is off the machined surface, therefore, the central part of the wire electrode 1 continues to be attracted to the machined surface, thus inevitably causing over-discharge.

In a method for reducing the electrostatic force of attraction 23, an average voltage may be reduced by extremely extending a discharge quiescent time (hereinafter referred to as "off-time"), which determines the ratio between discharge voltage application time and quiescent time. As long as a strong voltage for electric discharge is applied, however, the electrostatic force of attraction 23 cannot be made zero even if the off-time is extended.

EP 1316380 may be regarded the closest state of the art and discloses a wire electric-discharge machining apparatus provided with an inter-pole voltage correction unit for correcting a voltage corresponding to an interpole voltage according to a correction coefficient which increases with an elongation of discharge stop time.

### SUMMARY OF THE INVENTION

Accordingly, in consideration of these problems of the prior art, the object of the present invention is to provide a wire electric discharge machine, which has a function to prevent electric discharge during an approach or escape and suppress formation of electric discharge damage in the surface of a workpiece, thereby suppressing production of electric discharge damage during the approach or escape, and a finish machining method used in the wire electric discharge machine.

A first form of a finish machining method used in a wire electric discharge machine according to present invention is defined in claim 1.

A second form of the finish machining method used in a wire electric discharge machine according to the invention is defined in claim 2.

A dry-run function of the wire electric discharge machine to perform a command for a machining program without turning on a machining power source may be used as means for establishing the discharge-off state.

A wire electric discharge machine according to the invention is defined in claim 6.

### BRIEF DESCRIPTION OF THE DRAWINGS

FIG. 1 is a top view showing die hole machining;
FIG. 2 is a diagram illustrating deep damage formed in a workpiece as a wire electrode cuts the workpiece or escapes from it;
FIG. 3 is a side sectional view showing how a die hole shown in FIG. 2 is machined;
FIG. 4 is a diagram illustrating how electric discharge is inevitably started before upper and lower wire guides of the wire electrode reach their discharge starting positions;
FIG. 5 is a graph illustrating how damage is caused during an approach according to a prior art technique;
FIG. 6 is a schematic view showing an embodiment of a wire electric discharge machine body according to the present invention;
FIG. 7 is a schematic diagram of a numerical controller for controlling the wire electric discharge machine body;
FIG. 8 is a diagram illustrating how the displacement of a wire electrode by an electrostatic force of attraction is measured by using an optical transmission sensor (with a machining power source voltage not applied);
FIG. 9 is a diagram illustrating how the displacement of the wire electrode by the electrostatic force of attraction is measured by using the optical transmission sensor (with the machining power source voltage applied);
FIG. 10 is a diagram illustrating the relationship between the force of attraction of the wire electrode and the distance between the wire electrode and a workpiece;
FIG. 11 is a diagram illustrating the relationships between the position of the wire electrode and those of upper and lower wire guides during an approach with the machining power source voltage applied;
FIG. 12 is a diagram illustrating the relationships between the position of the wire electrode and those of the upper and lower wire guides during the approach in a discharge-off state (with the machining power source voltage not applied);
FIG. 13 is a graph illustrating how production of damage is suppressed in an approach area by the electric discharge machine of the present invention;
FIG. 14 is an example of a flowchart showing an algorithm of processing by the electric discharge machine of the invention;
FIG. 15 is a diagram illustrating electric discharge machining by a prior art electric discharge machine; and
FIG. 16 is a diagram illustrating electric discharge machining by the electric discharge machine of the invention.

### DETAILED DESCRIPTION OF THE INVENTION

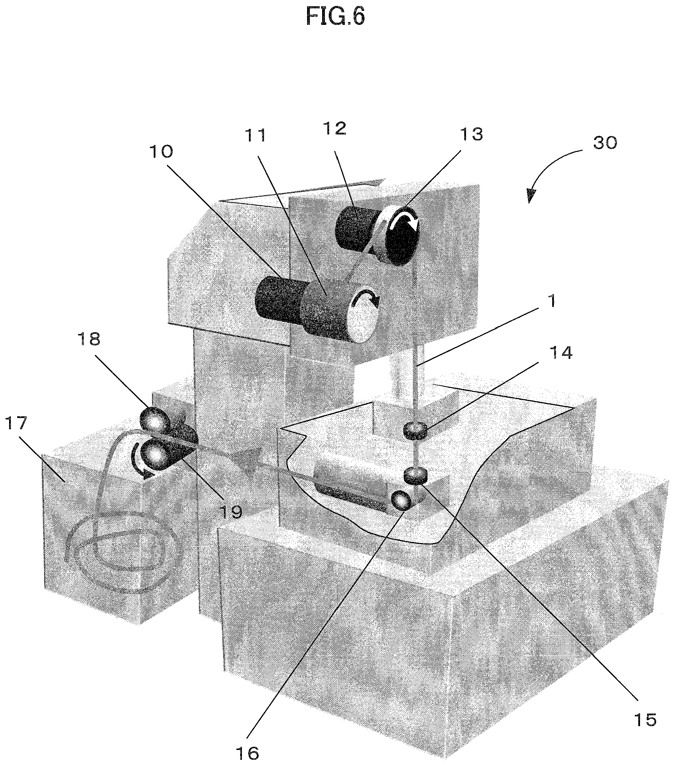

FIG. 6 is a schematic view showing an embodiment of a wire electric discharge machine body according to the present invention.

A wire bobbin 11 around which a wire electrode 1 is wound is given a predetermined low torque by a delivery unit torque motor 10. This torque is commanded opposite the lead-out direction of the wire electrode 1. The wire electrode 1 delivered from the wire bobbin 11 is passed through a plurality of guide rollers (not shown), and its tension between a brake shoe 13, which is driven by a brake motor 12, and a feed roller 19, which is driven by the wire electrode feed motor (not shown), is adjusted by the brake shoe 13.

The wire electrode 1 passed through the brake shoe 13 is recovered into a wire collection box 17 via an upper wire guide 14, lower wire guide 15, and lower guide roller 16 in such a manner that it is held between a pinch roller 18 and the feed roller 19, which is driven by the wire electrode feed motor (not shown).

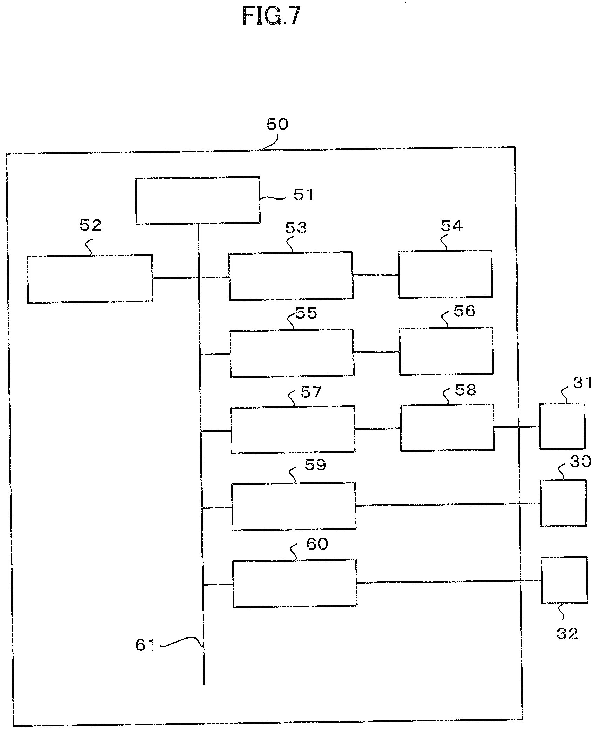

A wire electric discharge machine body 30 performs workpiece machining under the control of a numerical controller (CNC) 50 shown in FIG. 7. The numerical controller 50 comprises a processor (CPU) 51, memory 52 including a RAM, ROM, etc., display interface 53, display device 54, keyboard interface 55, keyboard 56, servo interface 57, servo amplifier 58, and input/output interface 60 for signal transfer to and from external equipment. These constituent elements of the numerical controller are connected to one another by a bus 61.

The wire electric discharge machine body 30 comprises a machining power source and is controlled through an interface 59. A servomotor 31 is driven by a servo amplifier 58. If a machining program is started, a command for the activation of the machining power source is issued through the interface 59. Also in turning off the power source, a command is given to the wire electric discharge machine body 30 through the interface 59. An input/output device 32 receives and delivers input and output signals through the input/output interface 60.

Conventionally, a wire electric discharge machine has a dry-run function for operating the real machine, as a method of checking the machining program. The dry run is an operation in which a machining program command is executed without turning on the machining power source and an axial movement is recognized.

According to the present invention, the machining program is started during an approach or escape in finish machining by means of the conventional wire electric discharge machine, and the axial movement is performed according to the program. Further, the problem of deep electric discharge damage is solved by establishing a discharge-off state (e.g., a dry-run state in which no discharge voltage is applied and electric discharge machining is not performed) to prevent electric discharge during this period.

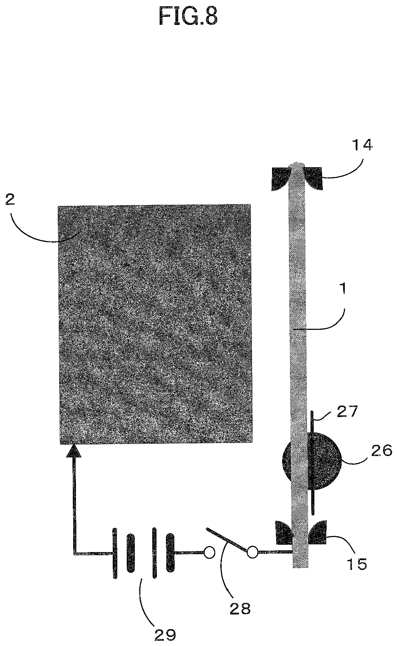

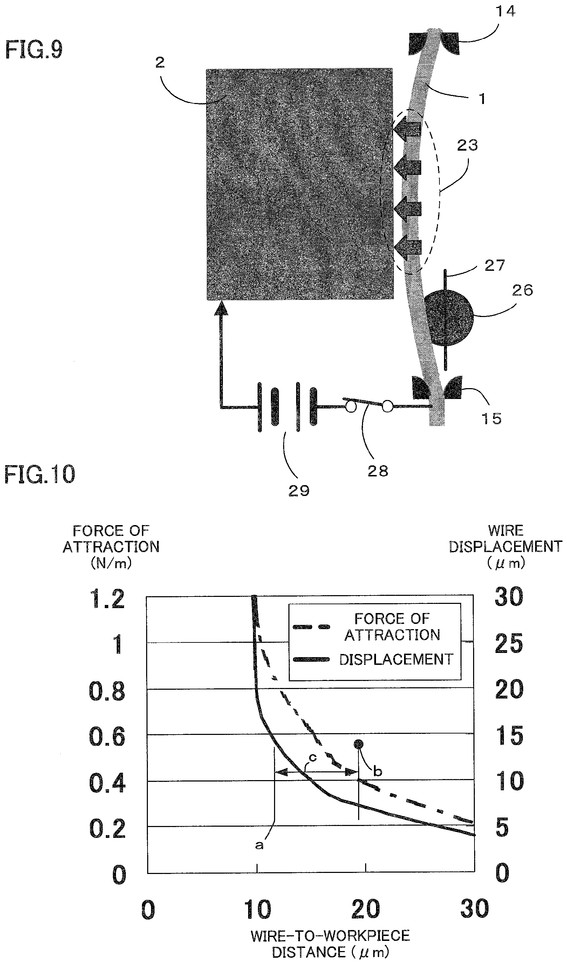

Deformation of the wire electrode 1 by an electrostatic force of attraction 23 will now be described with reference to FIGS. 8 and 9.

FIGS. 8 and 9 are diagrams illustrating how the displacement of the wire electrode by the electrostatic force of attraction is measured by using an optical transmission sensor. FIG. 8 shows a state in which a machining power source voltage is off, and FIG. 9 shows a state in which the power source voltage is on.

An optical transmission sensor 26 is a sensor for measuring the displacement of the wire electrode 1. The sensor 26 comprises a light emitting portion (not shown) and a light receiving portion (not shown) between which the wire electrode 1 is located. The positional relationship between the sensor 26 and the lower wire guide 15 is fixed. The position of the wire electrode 1 that intercepts light from the light emitting portion is changed by the electrostatic force of attraction 23, whereby an area that intercepts light incident on the light receiving portion is changed. Thereupon, the quantity of light incident on the light receiving portion changes. The displacement of the wire electrode 1 can be determined by measuring the change of the light quantity. Reference numeral 27 denotes a center position of the optical transmission sensor 26.

As mentioned before, FIG. 8 shows the state in which the machining power source voltage is off. If a machining power source switch 28 is turned off, the machining power source voltage from a machining power source 29 cannot be applied to the wire electrode 1. In this case, the electrostatic force of attraction 23 is not produced between the wire electrode 1 and a workpiece 2, and a central part of the wire electrode 1 between the upper and lower wire guides 14 and 15 is not displaced.

On the other hand, FIG. 9 shows the state in which the machining power source voltage is on. If the machining power source switch 28 is turned on, the machining power source voltage from the machining power source 29 is applied to the wire electrode 1. When this is done, the electrostatic force of attraction 23 is produced between the wire electrode 1 and the workpiece 2, and the central part of the electrode 1 is attracted toward the workpiece 2, whereupon the electrode 1 is displaced. The magnitude of the electrostatic force 23 varies depending on the applied voltage and the size of a gap between the wire electrode and the workpiece. In other words, the electrostatic force 23 is proportional to the reciprocal of the distance between the wire electrode and the workpiece, as well as proportional to the square of the applied voltage.

FIG. 10 is a diagram illustrating the relationship between the force of attraction of the wire electrode and the distance between the wire electrode and the workpiece. The electrostatic force of attraction and the displacement of the wire electrode are calculated based on the voltage, wire diameter, wire tension, workpiece thickness, and distance between the wire electrode and the workpiece.

The abscissa axis of the graph of FIG. 10 represents the wire-to-workpiece distance (µm), the left-hand ordinate axis represents the force of attraction (N/m) of the wire electrode 1, and the right-hand ordinate axis represents the displacement of the electrode 1. The electrostatic force of attraction 23 is proportional to the reciprocal of the distance between the wire electrode 1 and the workpiece 2. Likewise, the displacement of the wire electrode 1 is proportional to the reciprocal of the wire-to-workpiece distance.

When the wire-to-workpiece distance approaches 15 µm (point b on the abscissa axis of FIG. 10) according to a move program for an approach area in FIG. 10, the wire electrode is displaced 10 µm by the produced electrostatic force of attraction. Thereupon, the wire-to-workpiece distance becomes 5 µm (= 15 µm - 10 µm), thus inevitably reaching a dischargeable gap (point a on the abscissa axis of FIG. 10) at which electric discharge starts. Specifically, the electric discharge starts at a point (point b on the abscissa axis of FIG. 10) 10 µm short of the original position (point a on the abscissa axis of FIG. 10) of the wire electrode 1 at which the discharge starts without displacement. Thus, over-discharge continues in a movement section of 10 µm (section c in FIG. 10) where an actual arrival position is not reached yet.

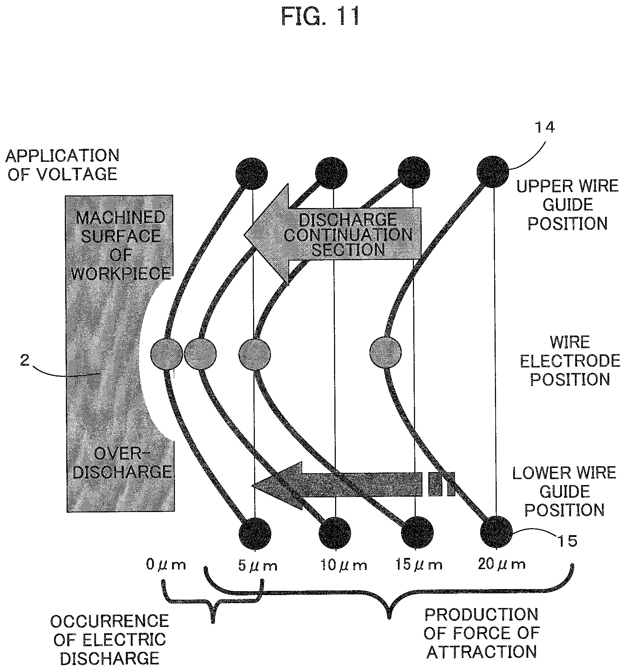

FIG. 11 is a diagram illustrating the relationships between the position of the wire electrode and those of the upper and lower wire guides during the approach with the machining power source voltage applied. This diagram shows the actual wire electrode and workpiece (with the machining power source voltage applied) in the process of occurrence of the over-discharge described with reference to the graph of FIG. 10.

As described with reference to the graph of FIG. 10, the wire electrode 1 is attracted to the workpiece 2 by the electrostatic force of attraction 23 between them, and the electric discharge starts at a point distant from a position where electric discharge is to occur originally. Therefore, the discharge continuation section is so long that a gouged groove 22 is inevitably formed in the workpiece 2 (problem of the prior art).

FIG. 11 shows the distance from the position of the machined surface of the workpiece. If the power source voltage is applied to the wire electrode 1, the electrostatic force of attraction 23 is produced between the wire electrode 1 and the machined surface of the workpiece 2, and the central part of the electrode is attracted toward the machined surface of the workpiece. If the wire electrode 1 is relatively moved toward the machined surface of the workpiece 2 by approaching, the central part of the electrode 1 reaches the gap between the electrode 1 and the workpiece 2 where electric discharge occurs when the 15-µm position is reached by the upper and lower wire guides 14 and 15. Thus, the section in which the upper and lower wire guides 14 and 15 move from the 15-µm position to the 5-µm position is the discharge continuation section.

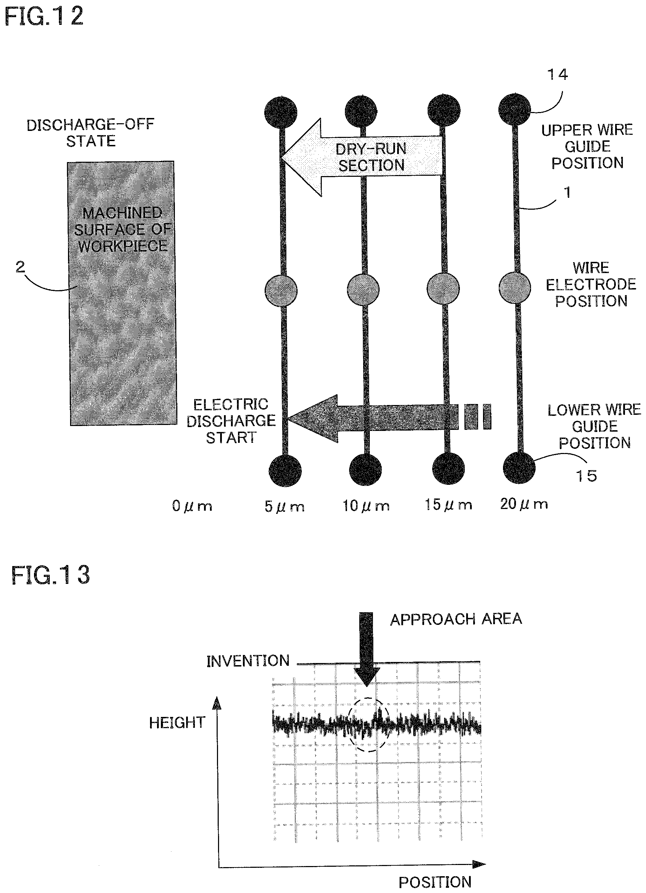

According to the present invention, production of an unnecessary discharge continuation section is prevented by maintaining the discharge-off state until the upper and lower wire guides 14 and 15 reach their discharge starting positions relative to the workpiece 2. This process will be described with reference to FIG. 12. FIG. 12 is a diagram illustrating the relationships between the position of the wire electrode 1 and those of the upper and lower wire guides 14 and 15 during the approach in the discharge-off state (with the machining power source voltage not applied). If the discharge continuation section of FIG. 11 is set to be a dry-run section, as shown in FIG. 12, over-discharge cannot be caused, so that the gouged groove 22 can be prevented from being formed in the workpiece 2.

The approach has been described with reference to FIG. 12. If the dry-run section is also provided for the escape, over-discharge can be avoided in the same manner as in the approach area, so that the gouged groove 22 cannot be formed in an escape area.

Thus, according to the present invention, formation of the gouged groove 22 in the machined surface of the workpiece 2 can be suppressed by establishing the discharge-off state in the approach and escape areas.

The following is a description of examples in which electric discharge is turned off by adding a program command and by automatic control based on electric discharge control software.

### [Example of Discharge-Off by Additional Program Command]

In this example, the program command for turning off electric discharge is added to the machining program. In the approach, a discharge-off command, such as a dry-run function command (M40), is inserted into a move block for the approach, and a discharge-on command, such as a dry-run cancel (electric discharge start) command (M80), is inserted into a block next to an approach program block (normally, same as an offset correction start command).

In the escape, on the other hand, the discharge-off command (dry-run command M40) or a positioning command G00 is inserted into an escape block (normally, same as an offset correction cancel command G40).

When the positioning command G00 is issued in the approach area, the wire electrode 1 is in contact with the workpiece 2 and short-circuited at an end point. Therefore, electric discharge machining cannot be started even if machining commands for subsequent blocks G01, G02 and G03 are issued. Thus, the discharge-off command is preferred to the positioning command.

### [Example of Discharge-Off by Automatic control with Electric Discharge Control Software]

The machining program is analyzed, the discharge-off command is automatically issued only to the approach area (to enable the dry-run function, for example) by software in the numerical controller (CNC) for controlling the wire electric discharge machine, and the discharge-on command is issued (to disenable the dry-run function) at the end of the block concerned. By doing this, the machining power source voltage is applied to start electric discharge.

Likewise, if the escape area of the workpiece at the end of machining is reached, the discharge-off command is issued again (to enable the dry-run function, for example). When the move block G40 terminates, the discharge-on command is restored (to disenable the dry-run function) to provide for the next machining block.

According to the present invention, as described in connection with the above two examples, it is necessary only that the discharge-off state (to enable the dry-run function) be established for a move program block for the approach or escape, and there is no need of any special control. Thus, no electrostatic force of attraction is produced at all, so that the straightness of the wire electrode 1 can be maintained.

In the determination of the approach program block, look-ahead is performed from the program start, for example, and a move block including offset start commands G41 and G42 is detected and determined to be the approach program block. In the determination of the escape program block, moreover, the move block including an offset cancel command block G40 is detected, for example, and it is used as the escape program block for discharge-off control.

In many cases of electric discharge machining by the wire electric discharge machine, as in machining of round holes, furthermore, the approach and escape areas of the workpiece 2 are superposed into one portion by making one revolution, as shown in FIG. 1. In these cases, the superposed portion is detected by an analysis of program look-ahead, and a block approaching the detected superposed portion can be controlled during the approach in the discharge-off state. During the escape, on the other hand, the block next to the detected superposed portion can be controlled in the discharge-off state.

The discharge-off state is a state in which the discharge-off command is issued so that no voltage for electric discharge machining is applied between a wire electrode and a workpiece to prevent occurrence of electric discharge. Further, the discharge-off state can be said to be established if the amount of actually weak electric discharge machining is extremely small when a weak pulse voltage is applied to detect contact (short-circuiting) between the wire electrode and the workpiece, for example.

The following is a description of switching from the discharge-off state to a discharge-on state during the approach. In finish machining, the workpiece 2 is cut by an additional finish machining allowance relative to a preceding machined part during the approach, so that such a situation may be caused that the wire electrode 1 is in contact with the machined surface of the workpiece 2. Since the wire electrode 1 moves in the discharge-off state (with the dry-run function enabled), however, it advances according to a machining program trajectory even in a short-circuited state in which the wire electrode 1 and the workpiece 2 are in contact with each other.

The control is switched to the application of a discharge voltage in order to cancel the dry-run function and establish the discharge-on state to resume electric discharge. In doing this, if a high discharge voltage is applied in the electrically short-circuited state with the wire electrode 1 and the workpiece 2 in contact with each other, the electrode 1 may possibly be fused.

In order to release the state of contact (short-circuiting) between the wire electrode 1 and the workpiece 2 in the wire electric discharge machine, therefore, the electrode 1 is automatically retreated along the trajectory of advance so that the short-circuiting is canceled (retreat control). After the cancellation of the short-circuiting is detected, a machining voltage for electric discharge is applied to resume electric discharge.

The weak voltage for detection of short-circuiting may be applied while the dry-run function is being executed or when the dry-run function is canceled. If short-circuiting between the wire electrode 1 and the workpiece 2 is not detected by the weak detection voltage so that an open state is recognized, the operation state is switched over to an electric discharge state in response to the discharge-on command. When this is done, the weak detection voltage is disabled without being applied between the wire electrode 1 and the workpiece 2, and a strong voltage for electric discharge is applied instead. Thus, a high voltage is not applied in a state when the wire electrode 1 and the workpiece 2 are short-circuited. During the retreat control, the electrostatic force of attraction of the wire electrode 1 is not produced, and the position of the wire electrode is not displaced.

Thus, electric discharge machining is resumed immediately after short-circuiting between the wire electrode 1 and the workpiece 2 is cancelled, so that electric discharge is started when the wire electrode 1 is in an appropriate position substantially coincident with those of the upper and lower wire guides 14 and 15 that support it. Consequently, the electric discharge machining cannot be excessively performed even if it is resumed after the retreat control for canceling short-circuiting after excessive cut by dry run.

The following is a description of switching from the discharge-on state to the discharge-off state during the escape. Also on the escape side, the discharge-off state (with the dry-run function enabled) is established by switching. During the escape, moreover, the interpolation command G00 (method in which a positioning move command is issued according to the program, not based on the shortest distance) may be used for the control.

According to the present invention, the move blocks for the approach and escape should only be subjected to dry run, and the straightness of the wire electrode 1 can be maintained without requiring any special control and without the production of the electrostatic force of attraction 23. If a voltage is applied, as shown in the graphs of FIGS. 5 and 13 for comparison between machining results, over-discharge can be eliminated according to the present invention, although over-discharge of several micrometers are observed according to the prior art.

FIG. 13 is a graph illustrating how production of damage is suppressed in an approach area by the electric discharge machine of the present invention. As seen from FIG. 13, formation of a gouged groove in the approach area of the workpiece 2 is suppressed according to the invention.

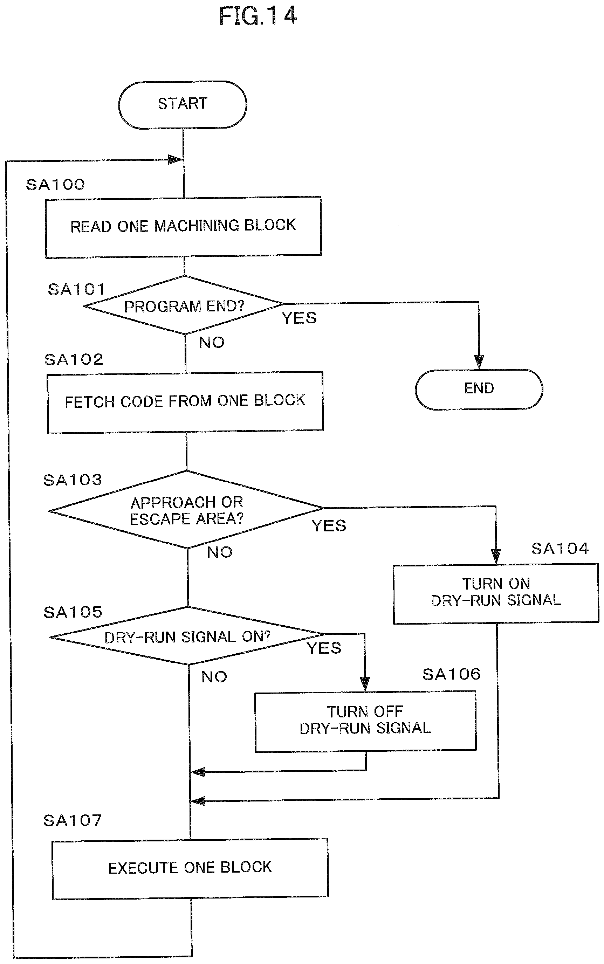

FIG. 14 is an example of a flowchart showing an algorithm of processing by the electric discharge machine of the invention. The following is a description of steps of this processing.

[Step SA100] One of machining blocks is read.

[Step SA101] It is determined whether or not the block read in Step SA100 indicates an end of the program. If the program end is indicated, the processing is terminated. If not, the program proceeds to Step SA102.

[Step SA102] A code is fetched from the read block.

[Step SA103] It is determined whether or not the block indicated by the fetched code is a program block in the approach or escape area. If the indicated block is a block in the approach or escape area, the program proceeds to Step SA104. If not, the program proceeds to Step SA105.

[Step SA104] A dry-run signal is turned on, whereupon the program proceeds to Step SA107.

[Step SA105] It is determined whether or not the dry-run signal is on. If the dry-run signal is on, the program proceeds to Step SA106. If not, the program proceeds to Step SA107.

[Step SA106] The dry-run signal is turned off, whereupon the program proceeds to Step SA107.

[Step SA107] The one block read in Step SA100 is executed, whereupon the program returns to Step SA100, and the processing is continued.

The following is a description of the machining program.

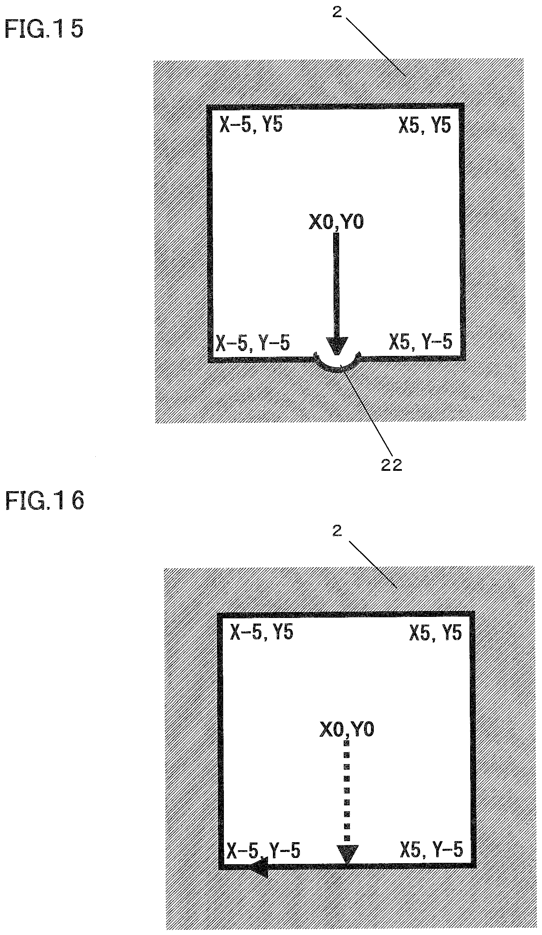

FIG. 15 is a diagram illustrating electric discharge machining based on the prior art technique. A machined shape shown in FIG. 15 can be obtained based on Program Example 1 given below. According to the prior art, the gouged groove 22 is inevitably formed in the approach area of the workpiece 2.

### (Program Example 1)

G92X0Y0
G90G01G42Y-5.;
X-5.;
Y5.;
X5.;
X0;
G40Y0;
M30;

In Program Example 1 described above, G92, G90 and G01 represent coordinate system setting, absolute command, and linear interpolation, respectively. Further, G42, G40 and M30 represent tool diameter correction, tool diameter correction offset cancel, and program end, respectively.

FIG. 16 is a diagram illustrating electric discharge machining by the electric discharge machine according to the present invention. A machined shape shown in FIG. 16 can be obtained based on Program Example 2 given below. As shown in FIG. 16, the gouged groove 22 is not formed in the approach area of the workpiece 2.

### (Program Example 2)

G92X0Y0
G90G01G42M40Y-5.;
M80X-5.;
Y5.;
X5.;
X0;
G40Y0;
M30;

In Program Example 2 described above, the dry-run command M40 and the machining command M80 are added to Program Example 1. M40 represents the discharge-off command, whereby electric discharge is turned off and dry run is caused. Further, M80 represents the discharge-on command, whereby M40 and dry run are canceled to restore a normal machining state.

According to the present invention, as described above, formation of a gouged groove in the workpiece can be suppressed by establishing the discharge-off state during the approach of the wire electrode 1 to or its escape from or its approach and escape to and from the workpiece in finish machining. If the present invention is carried out for both the approach and the escape, a greater effect can be obtained than when the invention is carried out for either the approach or the escape.

## Claims

1. A finish machining method of a wire electric discharge machine, comprising causing a wire electrode (1) to approach a workpiece (2), in a discharge-off state in which no discharge voltage is applied between a position at which electric discharge would begin to occur between a central part of the wire electrode (1) and the workpiece (2) if a discharge voltage were to be applied, and a discharge starting position of upper and lower wire guides (14, 15) of the wire electrode (1), and then, at reaching the discharge starting position, establishing a discharge-on state in which discharge voltage pulses are applied to perform finish machining.

2. A finish machining method of a wire electric discharge machine, comprising causing a wire electrode (1) to escape from a workpiece (2), in a discharge-off state in which no discharge voltage is applied, between a discharge starting position of upper and lower wire guides (14, 15) of the wire electrode (1) and a position at which electric discharge would begin to occur between a central part of the wire electrode (1) and the workpiece (2) if a discharge voltage were to be applied.

3. The finish machining method according to claim 1 or 2, wherein a dry-run function of the wire electric discharge machine to perform a command for a machining program without turning on a machining power source is used as means for establishing the discharge-off state.

4. The finish machining method according to claim 1, wherein the discharge-off state includes application of a weak pulse voltage for detecting contact between the wire electrode (1) and the workpiece (2).

5. The finishing method according to claim 4, wherein the wire electrode (1) is automatically retreated along a trajectory of advance so that electrical short-circuiting, if any, between the wire electrode (1) and the workpiece (2) in contact with each other is canceled, and a machining voltage for electric discharge is applied to resume electric discharge after the cancellation of the short-circuiting is detected, in order to remove the contact between the wire electrode (1) and the workpiece (2).

6. A wire electric discharge machine having a numerical controller (50) which is configured to perform the method of any of claims 1 to 5.

## Patentansprüche

1. Endbearbeitungsverfahren einer elektrischen Drahterodiermaschine, das umfasst, zu bewirken, dass eine Drahtelektrode (1) sich einem Werkstück (2) und einer Entladungsanfangsposition von oberen und unteren Drahtführungen (14, 15) der Drahtelektrode (1) in einem Entladungs-Aus-Zustand, in welchem keine Entladespannung zwischen einer Position, in der elektrische Entladung zwischen einem zentralen Teil der Drahtelektrode (1) und dem Werkstück (2) einsetzen würde, wenn eine Entladespannung angelegt ist, nähert, und dann bei Erreichen der Entladungsanfangsposition ein Entladungs-Ein-Zustand hervorgerufen wird, in welchem Entladungsspannungsimpulse angelegt werden, um eine Endbearbeitung durchzuführen.

2. Endbearbeitungsverfahren einer elektrischen Drahterodiermaschine, das umfasst, zu bewirken, dass eine Drahtelektrode (1) in einem Entladungs-Aus-Zustand, in welchem keine Entladespannung angelegt ist, zwischen einer Entladeanfangsposition von oberen und unteren Drahtführungen (14, 15) der Drahtelektrode (1) und einer Position, an der elektrische Entladung zwischen einem mittleren Abschnitt der Drahtelektrode (1) und einem Werkstück (2) einsetzen würde, wenn eine Entladespannung angelegt wäre, einem Werkstück (2) ausweicht.

3. Endbearbeitungsverfahren nach Anspruch 1 oder 2, wobei ein Trockenlauf der elektrischen Drahterodiermaschine zum Durchführen eines Befehls für ein Bearbeitungsprogramm ohne Einschalten einer Bearbeitungsenergiequelle als Mittel genutzt wird, den Entladungs-Aus-Zustand herzustellen.

4. Endbearbeitungsverfahren nach Anspruch 1, wobei der Entladungs-Aus-Zustand das Anlegen einer schwachen Impulsspannung zum Ermitteln eines Kontakts zwischen der Drahtelektrode (1) und dem Werkstück (2) umfasst.

5. Endbearbeitungsverfahren nach Anspruch 4, wobei die Drahtelektrode (1) automatisch entlang einer Vorwärtsstrecke zurückgezogen wird, sodass elektrische Kurzschließung, falls vorhanden, zwischen der Drahtelektrode (1) und dem Werkstück (2), die sich berühren, aufgehoben wird, und eine Bearbeitungsspannung zur elektrischen Entladung angelegt wird, um elektrische Entladung wieder aufzunehmen, nachdem die Aufhebung der Kurzschließung erkannt ist, um den Kontakt zwischen der Drahtelektrode (1) und dem Werkstück (2) zu lösen.

6. Elektrische Drahterodiermaschine mit einer numerischen Steuerung (50), welche konfiguriert ist, das Verfahren nach einem der Ansprüche 1 bis 5 durchzuführen.

## Revendications

1. Procédé d'usinage de finition d'une machine de décharge électrique faisant appel à un fil, comprenant une étape consistant à amener un fil-électrode (1) à s'approcher d'une pièce (2), dans un état de décharge désactivée dans lequel aucune tension de décharge n'est appliquée entre une position au niveau de laquelle une décharge électrique commencerait à se produire entre une partie centrale du fil-électrode (1) et la pièce (2) si une tension de décharge devait être appliquée, et une position de début de décharge de guides de fil supérieur et inférieur (14, 15) du fil-électrode (1), puis, lorsque la position de début de décharge est atteinte, l'établissement d'un état de décharge activé dans lequel des impulsions de tension de décharge sont appliquées pour réaliser un usinage de finition.

2. Procédé d'usinage de finition d'une machine de décharge électrique faisant appel à un fil, comprenant une étape consistant à amener un fil-électrode (1) à s'échapper d'une pièce (2), dans un état de décharge désactivée dans lequel aucune tension de décharge n'est appliquée, entre une position de début de décharge de guides de fil supérieur et inférieur (14, 15) du fil-électrode (1) et une position au niveau de laquelle une décharge électrique commencerait à se produire entre une partie centrale du fil-électrode (1) et la pièce (2) si une tension de décharge devait être appliquée.

3. Procédé d'usinage de finition selon la revendication 1 ou 2, dans lequel une fonction d'essai à blanc de la machine de décharge électrique faisant appel à un fil pour réaliser une instruction pour un programme d'usinage sans allumer une source d'alimentation d'usinage est utilisée comme moyen d'établir l'état de décharge désactivée.

4. Procédé d'usinage de finition selon la revendication 1, dans lequel l'état de décharge désactivée comprend l'application d'une faible tension d'impulsion pour détecter un contact entre le fil-électrode (1) et la pièce (2).

5. Procédé de finition selon la revendication 4**,** dans lequel le fil-électrode (1) est automatiquement retiré le long d'une trajectoire d'avancement de sorte qu'un court-circuit électrique, le cas échéant, entre le fil-électrode (1) et la pièce (2) en contact l'un avec l'autre soit annulé, et une tension d'usinage pour une décharge électrique est appliquée pour reprendre une décharge électrique une fois que l'annulation du court-circuit est détectée, afin de supprimer le contact entre le fil-électrode (1) et la pièce (2).

6. Machine de décharge électrique faisant appel à un fil comprenant un dispositif de commande numérique (50) qui est configuré pour réaliser le procédé selon l'une quelconque des revendications 1 à 5.
